# EUROPEAN PATENT APPLICATION

(11) **EP 4 180 945 A1**
(43) Date of publication of application: **17.05.2023**
(21) Application number: 22203068.6
(22) Date of filing: 21.10.2022
(51) Int. Cl.: G06F 3/147

(54) **GRAPHICS RENDERING**

(30) Priority: 11.11.2021 GB 202116216
(71) Applicant: Sony Interactive Entertainment Inc., Tokyo 108-0075 (JP)
(72) Inventor: CERRATO, Maurizio, London, W1F 7LP (GB); BREUGELMANS, Mark, London, W1F 7LP (GB); ARMSTRONG, Calum, London, W1F 7LP (GB)
(74) Representative: D Young & Co LLP

(57) **Abstract**

A data processing apparatus comprises allocation circuitry to allocate a graphical feature for a virtual environment to a respective layer from a plurality of respective layers in dependence upon one or more properties for the graphical feature, wherein the plurality of respective layers comprise a mobile layer and at least one of a mobile re-projection layer and a static re-projection layer, rendering circuitry to render graphical features allocated to respective different layers of the plurality of respective layers with a different rendering quality, and an output image generator to generate an image for display according to a viewpoint of a virtual camera, wherein the image comprises graphical features allocated to respective different layers of the plurality of layers.

## Description

### Field of the Disclosure

The present disclosure relates to data processing apparatus and method for rendering graphics.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present disclosure.

The speed and realism with which a scene can be rendered is a key consideration in the field of computer graphics processing. Graphics processing operations are performed by a processing unit (GPU and/or CPU) as part of an execution of an application such as a computer game. Graphics processing operations typically comprise processing of model data or other predefined graphics data for graphical features in accordance with a graphics processing pipeline to generate image data for an image frame.

For an image frame including multiple graphical features, the image data for the image frame is typically generated by performing graphics processing operations using input data structures each defining the respective features in the image frame. For example, graphics processing operations typically comprise one or more geometric processing operations for operating on the vertices of a polygonal mesh data structure to generate image data for an object corresponding to the polygonal mesh. Image data is thus generated for respective graphical features in the image frame.

Conventional videogame rendering systems (graphics engines, graphics drivers, and/or graphics cards) are known to enable a user to select a resolution or frame rate of a videogame. This may be done for example to match the resolution of a rendered image to the native resolution of a display device or similarly to match a frame rate to a refresh rate of the display device.

In addition, conventional rendering systems are known to enable a developer, during a development stage, to segment scenes into multiple so-called layers that are each rendered by a rendering system and then composited to form a composite image to thereby speed up a rendering time for an image frame. However, as virtual reality systems become more complex with increasingly complex and feature-rich virtual environments, there is a need to improve graphical rendering efficiency.

It is an aim to provide improved graphical rendering.

It is in the context of the above arrangements that the present disclosure arises.

Various aspects and features of the present disclosure are defined in the appended claims and within the text of the accompanying description. Example embodiments include at least a system, a method, a computer program and a machine-readable, non-transitory storage medium which stores such a computer program.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an example of a data processing apparatus for processing graphics data for a content to render image frames for display;
Figure 2 schematically illustrates a data processing apparatus in accordance with embodiments of the disclosure;
Figure 3 is a schematic flowchart of an image rendering and re-projection process;
Figure 4 is a schematic timing diagram of an image rendering and re-projection process;
Figure 5 is a schematic flowchart illustrating an example process of allocating a graphical feature to a layer from a plurality of layers; and
Figure 6 is a schematic flowchart of a data processing method.

### DESCRIPTION OF THE EMBODIMENTS

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

A graphics rendering method and apparatus are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, an entertainment system or videogame console such as the Sony^{®} PlayStation 5^{®} is an example of a graphical rendering apparatus according to embodiments of the present disclosure, and similarly may implement a graphical rendering method (for example under suitable software instruction) according to embodiments of the present disclosure.

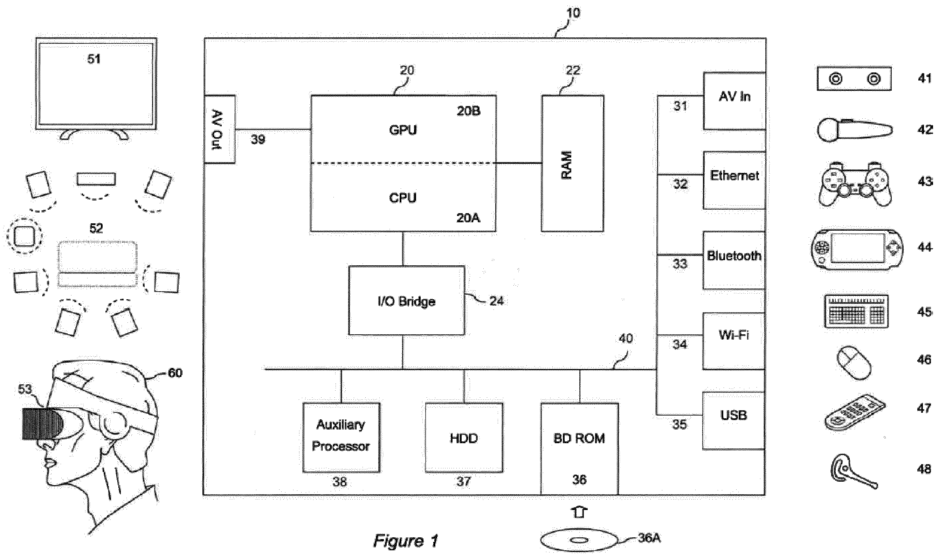

Figure 1 schematically illustrates an overall system architecture of an example of a graphical rendering apparatus in the form the Sony^{®} PlayStation 4^{®} entertainment device. A system unit 10 is provided, with various peripheral devices connectable to the system unit. The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ^{®} drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ^{®} port 32, a Bluetooth ^{®} wireless link 33, a Wi-Fi ^{®} wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ^{®}; wand-style videogame controllers 42 such as the PlayStation Move ^{®} and conventional handheld videogame controllers 43 such as the DualShock 4 ^{®}; portable entertainment devices 44 such as the PlayStation Portable ^{®} and PlayStation Vita ^{®}; a keyboard 45 and/or a mouse 46; a media controller 47, for example in the form of a remote control; and a headset 48. Other peripheral devices may similarly be considered such as a printer, or a 3D printer (not shown).

The GPU 20B, optionally in conjunction with the CPU 20A, generates video images and audio for output via the AV output 39. Optionally the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In operation, the entertainment device defaults to an operating system such as a variant of FreeBSD 9.0. The operating system may run on the CPU 20A, the auxiliary processor 38, or a mixture of the two. The operating system provides the user with a graphical user interface such as the PlayStation^{®} Dynamic Menu. The menu allows the user to access operating system features and to select games and optionally other content.

As noted previously, such an entertainment device is suitable for implementing a method of rendering image frames for a virtual environment according to embodiments of the present description.

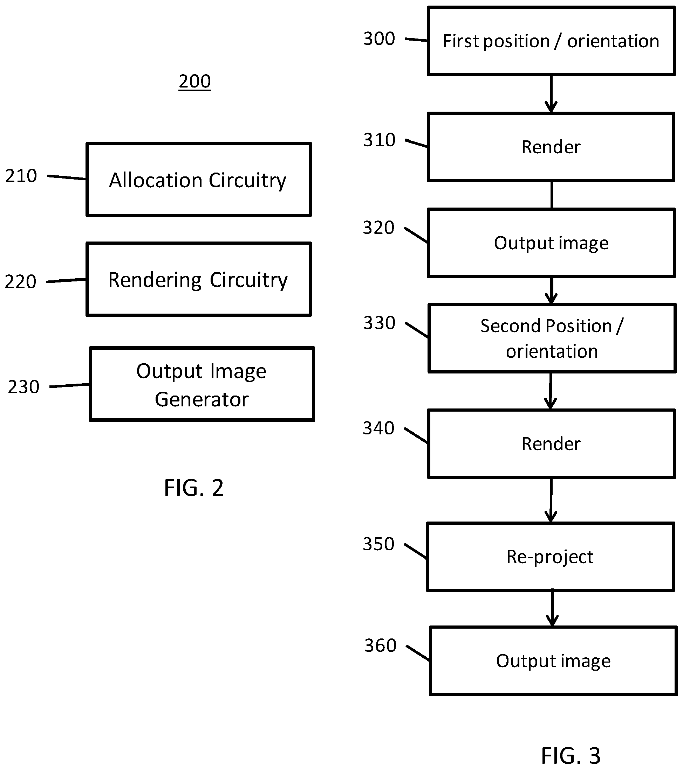

Referring now to Figure 2, in embodiments of the disclosure a data processing apparatus 200 for generating one or more images for display, comprises:
allocation circuitry 210 to allocate a graphical feature for a virtual environment to a respective layer from a plurality of respective layers in dependence upon one or more properties for the graphical feature, wherein the plurality of respective layers comprise a mobile layer and at least one of a mobile re-projection layer and a static re-projection layer;
rendering circuitry 220 to render graphical features allocated to respective different layers of the plurality of respective layers with a different rendering quality; and
an output image generator 230 to generate an image for display according to a viewpoint of a virtual camera, in which the image comprises graphical features allocated to respective different layers of the plurality of layers.

The data processing apparatus 200 may for example be provided as part of a server device or as part of a user's entertainment device (e.g. as part of a games console or generic processing device) that is local to a user. The data processing apparatus 200 can thus generate an image for display and output the image for display by a display device such as a head-mountable display device (HMD) and/or a monitor, via either a wired or wireless communication with the display device. Alternatively, the data processing apparatus 200 may be provided as part of an HMD. References herein to images generated by the output image generator 230 refer to generating either stereoscopic images for which left images and right images are displayed to the respective eyes or generating a single image that is displayed to both eyes.

The data processing apparatus 200 comprises rendering circuitry 220 to perform rendering operations to render one or more graphical features for a virtual environment, in which graphical features for the virtual environment are allocated to respective layers and a different rendering quality is associated with respective different layers.

A virtual environment for a content such as a video game typically includes a number of respective graphical features. There are a number of types of graphical feature associated with virtual environments, but they can generally be considered to fall into two broad categories; the first is scenery, which is typically static with respect to an origin or other reference point of the virtual environment. The second is virtual objects which may or may not be static with respect to the virtual environment and may have different degrees of relative mobility.

In embodiments of the disclosure, the plurality of respective layers comprises a mobile layer and at least one of a mobile re-projection layer and a static re-projection layer, in which the mobile layer, the mobile re-projection layer and the static pre-projection layer each have a different rendering quality. The mobile re-projection layer may also be referred to herein as a re-projection layer and the static re-projection layer may also be referred to herein as a static layer.

The allocation circuitry 210 is configured to allocate at least one graphical feature for the virtual environment to a respective layer from the plurality of respective layers for the virtual environment in dependence upon one or more properties for the graphical feature. In some examples, the allocation circuitry 210 is configured to allocate each graphical feature for the virtual environment to a respective layer from the plurality of respective layers. Techniques for allocating a graphical feature to a respective layer from the plurality of layers are discussed in more detail later. Graphical features can be appropriately allocated to the respective layers based on one or more properties, and rendering resources (or more generally, processing resources) can be efficiently utilised to optimise graphical rendering efficiency.

Generally, relatively mobile graphical features for the virtual environment can be allocated to the mobile layer, relatively less mobile graphical features for the virtual environment can be allocated to the mobile re-projection layer and static graphical features for the virtual environment can be allocated to the static re-projection layer. A mobility of a graphical feature may refer to mobility of the graphical feature with respect to the virtual environment itself (e.g. with respect to a reference point for the virtual environment) and/or mobility of the graphical feature with respect to a virtual camera for the virtual environment.

The output image generator 230 is configured to generate an image for display so that the image includes a portion of the virtual environment included with the current field of view of the virtual camera. As such, when generating a sequence of output images according to the viewpoint of the virtual camera, a graphical feature included in an image and having a low degree of mobility will have a substantially same (or similar) arrangement and thus appearance in at least some of the images frames in the sequence, whereas a graphical feature included in an image frame and having a high degree of mobility (e.g. an in-game projectile or avatar or car) will have a variable position that varies for the sequence of image frames. As such, the allocation circuitry 210 is configured to allocate a graphical feature to a respective layer in dependence upon one or more properties for the graphical feature, in which a property used by the allocation circuitry 210 for the allocation is related to a likelihood of movement of the graphical feature within a sequence of images frames to be generated for the virtual camera. Moreover, as explained in more detail below, a likelihood that a given graphical feature will exhibit movement in a sequence of image frames generated for a virtual camera can be related to one or more properties for the graphical feature such as motion with respect to other graphical features and/or motion with respect to a virtual camera and/or depth with respect to the virtual camera. Therefore, using various data associated with a graphical feature in a virtual environment, the allocation circuitry 210 can accordingly allocate the graphical feature to a respective layer so that rendering of the graphical feature uses a rendering quality associated with that respective layer.

A static graphical feature corresponds to a feature that has a substantially same position in two or more successive images output for display irrespective of changes in the viewpoint for the virtual camera. For example, for a content such as a video game having one or more user interface elements, such as a health bar UI or score bar Ul, the user interface elements may be included in an image frame that is output for display such that a position of the user interface element in the image frames remains unchanged regardless of changes in the position and/or orientation of the viewpoint of the virtual camera. Alternatively or in addition, a graphical feature such as a helmet worn by an in-game character or a weapon held by an in-game character, may be included in an image frame that is output for display such that a position of the helmet or weapon in the image frame remains unchanged regardless of changes in the position and/or orientation of the viewpoint of the virtual camera. For example, in some first person shooter games, a virtual helmet or other similar structure can be included in an image frame to provide a viewer the impression of viewing the scene as though they are wearing a helmet and as such the position and appearance of the helmet remains unchanged for a series of image frames generated for the virtual camera even though the virtual camera moves with respect to the virtual environment. For virtual environments including such static graphical features, these graphical features can be allocated to the static re-projection layer so that the static graphical features can be rendered with a rendering quality associated with the static re-projection layer. In some examples, a graphical feature allocated to the static re-projection layer may be initially rendered by the rendering circuitry 220 and then subsequently re-projected for each image frame output by the output image generator 230. Alternatively, a graphical feature allocated to the static layer may be rendered at a lower rendering rate and re-projected to obtain a suitable frame rate for the graphical feature allocated to the static re-projection layer. It will be appreciated that depending on the virtual environment, static graphical features may or may not be present in which case the plurality of respective layers may comprise the mobile layer and the mobile re-projection layer without requiring the static re-projection layer.

Examples of such static graphical features may include: one or more user interface elements; an avatar hand when the viewpoint corresponds to a first person view; a portion of a helmet when the viewpoint corresponds to a first person view; and a portion of an avatar when the viewpoint corresponds to a third person view.

The mobile layer differs from the mobile re-projection layer in that a higher rendering quality is associated with the mobile layer, and re-projection can be used for updating a rendered graphical feature allocated to the mobile re-projection layer in dependence upon changes in the position and/or orientation for the viewpoint of the virtual camera. The mobile re-projection layer differs from the static re-projection layer in that a higher rendering quality is used for the mobile re-projection layer (e.g. by rendering with a higher frame rate and/or image resolution), and whereas re-projection is used for updating a rendered graphical feature for the mobile re-projection layer in dependence upon changes in the position and/or orientation for the viewpoint of the virtual camera, a rendered graphical feature allocated to the static re-projection layer is re-projected to have substantially the same position in each image frame and is thus re-projected irrespective of changes in the position and/or orientation for the viewpoint of the virtual camera.

As such, in a simplest case the plurality of layers comprises the mobile layer and one of the mobile re-projection layer and the static re-projection layer. For ease of explanation, the following discussion will refer to the mobile layer and the mobile re-projection layer (also referred to herein as a first layer and second layer, respectively) but it will be appreciated that the technique may be implemented using the mobile layer and the static re-projection layer, or using a plurality of layers comprising the mobile layer, the mobile re-projection layer and the static re-projection layer.

Optionally, the plurality of layers may comprise a plurality of respective mobile re-projection layers each corresponding to a different degree of graphical feature mobility and each having a different rendering quality. For example, the mobile layer may have a highest rendering quality and a first mobile re-projection layer and second mobile re-projection layer may be provided, in which the first mobile re-projection layer corresponds to a higher graphical feature mobility than the second mobile re-projection layer, and the first mobile re-projection layer has a higher rendering quality than the second mobile re-projection layer.

More generally, graphical features can be allocated to the respective layers according to one or more properties related to feature mobility and the number of layers is not particularly limited so that a larger or smaller number of respective layers can be used as required. For example, for a virtual environment comprising a large number of respective graphical features it may be beneficial to use a greater number of respective layers, whereas for a virtual environment with fewer graphical features just the mobile layer and one of the mobile re-projection layer and the static re-projection layer may be used. This is discussed in more detail later.

More generally, one or more first graphical features allocated to a first layer (e.g. mobile layer) are rendered by the rendering circuitry 220 with a first rendering quality and one or more second graphical features allocated to a second layer (e.g. mobile re-projection layer or static re-projection layer) are rendered by the rendering circuitry 220 with a second rendering quality different from the first rendering quality. Hence more generally, at least some of the graphical features for the virtual environment are allocated to the layers to sort the graphical features into layers so that the graphical features can be rendered and different rendering resources can be used appropriately. In this way, rendering resources can be used in a targeted manner so that higher quality rendering can be performed for a graphical feature allocated to the mobile layer and lower quality rendering can be performed for a graphical feature allocated to the mobile re-projection layer or static re-projection layer.

In some cases, an image for display can be generated by the output image generator 230 based on rendered graphical features for a single layer of the plurality of layers. For example, in the case of an image frame comprising just a sky portion of a virtual environment, the graphical feature corresponding to the sky may be allocated to a respective layer so that the rendering resources associated with that respective layer are used by the rendering circuitry 220 for rendering the sky portion and the output image generator 230 generates the image frame for display. Alternatively, for a more feature rich image frame comprising a number of respective graphical features, one or more of the graphical features are rendered with a first rendering quality associated with a first layer and one or more of the graphical features are rendered with a second rendering quality associated with a second layer, and the output image generator 230 generates an image for display comprising graphical features allocated to the respective different layers and thus having been rendered with different rendering qualities. As such, the output image generator 230 is configured to combine one or more rendered graphical features allocated to a first layer with one or more rendered graphical features allocated to a second layer to generate the image frame.

For example, a relatively mobile graphical feature, such as a virtual car in the virtual environment, can be allocated to the mobile layer by the allocation circuitry 210 depending on one or more properties for the virtual car, whereas a relatively less mobile graphical feature such as the sky portion (being relatively less mobile in that the sky portion remains relatively unchanged for a series of image frames or that the sky portion does not move with respect to a reference point), can be allocated to the mobile projection layer. For an image frame including the virtual car (or a portion thereof) and the sky portion, the virtual car and sky portion are each rendered with a rendering quality associated with their corresponding layer, and the output image generator 230 is configured to generate a composite image comprising the virtual car and the sky portion. In particular, a higher rendering quality is used for the mobile layer than the mobile re-projection layer so that greater rendering resources can be utilised for rendering a relatively more mobile graphical feature such as the virtual car (which is an example of a virtual object in the virtual environment). In this way, rendering resources can be optimally targeted by using a lower rendering quality for a feature in one layer whilst using a higher rendering quality for another feature in another layer and the allocation circuitry 210 performs processing operations to appropriately allocate one or more graphical features to the respective layers according to a property associated with a graphical feature.

The rendering circuitry 220 thus renders graphical features allocated to respective different layers and the output image generator generates an image for display including a portion of a virtual environment included within a field of view of a virtual camera for the virtual environment, in which the image comprises graphical features allocated to respective different layers.

As mentioned above, a virtual camera has an associated viewpoint with respect to the virtual environment such that a portion of the virtual environment is included within the field of view of the virtual camera. The virtual camera may follow a character in the virtual environment to thereby move with respect to the virtual environment. For example, the virtual camera may follow a non-player character (NPC) in a video game or may be controlled responsive to a user input to follow a player-controlled character. In some examples, the virtual camera may provide a first or third person viewpoint of a given character in a game. Alternatively, the virtual camera may have a fixed position with respect to the virtual environment and may be controlled responsive to an input from a spectator (non-playing user) to update an orientation of the virtual camera. Alternatively, the virtual camera may be controlled responsive to an input from a spectator to allow the spectator to change both a position and an orientation for the virtual camera with respect to the virtual environment without the spectator actively participating in a video game. Hence at least one of the position and the orientation of the virtual camera can be updated and at least one of the position and the orientation may optionally be controlled in response to a user input.

In some examples, at least one of the position and orientation of the virtual camera corresponds to tracked movements of an HMD worn by a user so that the viewpoint for the virtual camera is updated according to the user's head movements. A position and/or orientation of an HMD can be tracked using one or more image sensors and/or one or more inertial sensors, such as an accelerometer, gyroscope and/or magnetometer. For example , known inside-out and/or outside-in tracking techniques using image sensors mounted on an HMD and/or mounted to capture images including an HMD can be used to track the position and orientation of the HMD. Therefore, in some cases the viewpoint for the virtual camera can be controlled by a user to move with respect to the virtual environment based on movement of an HMD.

The virtual camera thus has a viewpoint with respect to the virtual environment and the data processing apparatus 200 is configured to output an image for display in dependence upon the viewpoint of the virtual camera, in which re-projection can be used for a graphical feature allocated to the mobile re-projection layer or the static re-projection layer to generate an output image including that graphical feature with a suitable frame rate greater than a rate at which rendering is performed for that graphical feature.

In embodiments of the disclosure, the output image generator 230 is configured to generate the image for display by re-projecting at least one rendered graphical feature allocated to the mobile re-projection layer or the static re-projection layer. The rendering circuitry 220 is configured to render a graphical feature allocated to the mobile re-projection layer (or the static re-projection layer) with a rendering quality such that either a single initial rendering of the graphical feature is re-projected for use in an image frame output by the output image generator 230 or a rate at which the graphical feature is rendered is less than a rate at which the output image generator outputs the image frames for display. For example, the output image generator 230 may be configured to output images for display by a display device having a frame rate of X Hz (in this example a value of X = 60 Hz will be used) and a graphical feature allocated to the mobile re-projection layer rendered using the rendering resources for that layer may be initially rendered just once and then re-projected to obtain a suitable frame rate, or may be rendered at a lower frame rate than X Hz (e.g. 30 Hz) such that re-projection is performed by the output image generator 230 to re-project the rendered graphical feature to obtain a higher frame rate that is substantially the same as the frame rate at which the images are output by the output image generator 230 for display.

For example, a graphical feature allocated to the mobile re-projection layer may be initially rendered by the rendering circuitry 220 according to a given viewpoint for the virtual camera at a given time, and the output image generator 230 is configured to update the rendered graphical feature by re-projecting the rendered graphical feature according to a difference between the given viewpoint and a current viewpoint of the virtual camera so that the re-projected graphical feature can be included in an image output by the output image generator 230 for the current viewpoint of the virtual camera. Alternatively or in addition, a graphical feature allocated to the static re-projection layer may be initially rendered by the rendering circuitry 220 (regardless of a viewpoint for the virtual camera), and the output image generator 230 is configured to re-project the rendered graphical feature so that the re-projected graphical feature can be included in an image output by the output image generator 230 for the current viewpoint of the virtual camera.

In some examples, a graphical feature allocated to the mobile re-projection layer (or static re-projection layer) may be initially rendered by the rendering circuitry 220 and then a re-projection of the initially rendered graphical feature may be used for each subsequent image output by the output image generator 230. Alternatively, in some examples a graphical feature allocated to the mobile re-projection layer may be rendered at a given rate that is less than the frame rate for the images output by the output image generator 230 such that the graphical feature is rendered at the given rate and also re-projected to obtain the frame rate for the images output by the output image generator 230. In this case, a graphical feature allocated to the mobile re-projection layer may be rendered at a first given time and used for display in one or more image frames using a re-projection until a further version of the graphical feature has been rendered.

Figure 3 is a schematic flowchart illustrating an example technique for image rendering and re-projection. The schematic flowchart of figure 3 will be described with reference to the mobile layer and the mobile re-projection layer, in which the mobile layer has a greater rendering rate than the mobile re-projection layer and the rendering rate of the mobile layer is substantially the same as a frame rate at which images are output by the output image generator 230, but the technique can be similarly implemented for any number of layers having differing rendering rates.

At the step 300, first data indicative of a position and/or orientation of an initial viewpoint is received. At the step 310, a graphical feature allocated to the mobile layer and a graphical feature allocated to the mobile re-projection layer are rendered according to the first data. At the step 320, an image is generated for display by the output image generator in which the image comprises the rendered graphical feature allocated to the mobile layer and the rendered graphical feature allocated to the mobile re-projection layer. At the step 330, second data indicative of a current position and/or current orientation of the current viewpoint (also referred to as an updated position and/or updated orientation of the viewpoint) is received (the first and second data may for example be received from a game engine executing a video game application or from a tracking unit of an HMD for example). At the step 340, the graphical feature allocated to the mobile layer is rendered according to the second data. At the step 350, the graphical feature allocated to the mobile re-projection layer, which has been rendered at the step 310, is re-projected depending on a difference between the first data and the second data. In this case, re-projection is used for the graphical feature allocated to the mobile re-projection layer because the rendering rate associated with the mobile re-projection layer is less than that of the mobile layer. At the step 360, the graphical feature rendered at the step 340 and the re-projected graphical feature from the step 350 are used by the output image generator 230 to generate an image for display. In this example, the mobile layer has a rendering rate that is substantially equal to a frame rate at which the image frames are to be output. Consequently, one or more graphical features allocated to the mobile layer can be rendered at a rate corresponding to the rate at which an image frame is to be output, and re-projection for the one or more graphical features allocated to the mobile layer is not required, in this case, to obtain the output image.

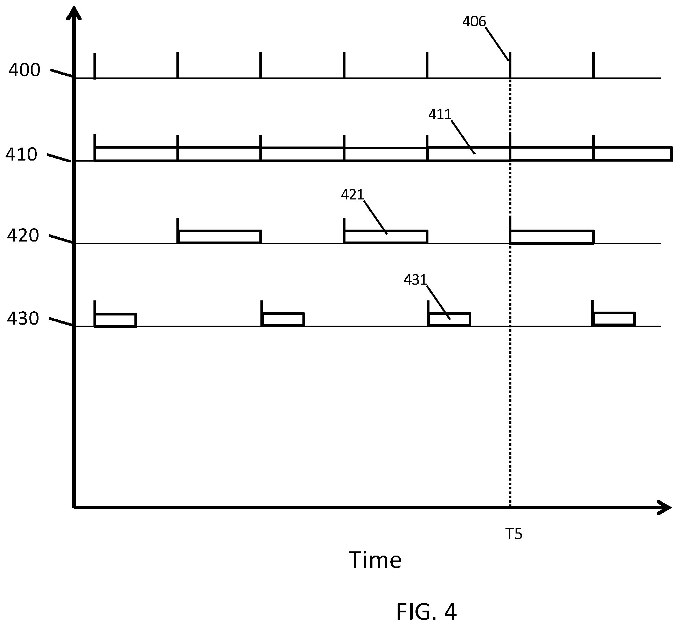

Figure 4 is a schematic timing diagram of an example image rendering and re-projection process, in which time is represented from left to right along a horizontal axis. The arrangement to be discussed below makes use of re-projection to optimise use of processing resources. In particular, in some examples, one or more graphical features can be rendered at a lower rendering rate and then subjected to a re-projection process to re-project the renderer graphical feature to obtain a higher frame rate, as discussed above with reference to Figure 3. Such an arrangement is useful in systems where there is a desire to output images at the higher frame rate but the processing resources of the system either cannot cope with generating the entirety of an image at the higher frame rate or processing resources can be more efficiently utilised by using a lower frame rate for certain portions and a higher frame rate for other portions.

A row 400 of Figure 4 represents a frame rate (image rate) at which the output image generator 230 is to output an image frame. For example, the frame rate may be 120 Hz, 60 Hz or 30 Hz, although other values may of course be used. In the present example, for the purposes of the discussion, a frame rate of 60 Hz will be assumed such that an image frame is output every 1/60 seconds.

As an overview of an example, one or more mobile layers may have an associated rendering rate that is substantially the same as the frame rate (for example the plurality of layers may comprise two or more mobile layers having substantially the same rendering rate but having different image resolutions). However, other layers such as the mobile re-projection layer have an associated rendering rate that is less than the frame rate and as such re-projection can be used for rendered graphical features allocated to such layers to obtain a re-projected graphical feature for use in forming the image output for display.

A row 410 schematically illustrates a first rendering process 411 for a mobile layer which has a first rendering rate substantially the same as the frame rate in row 400.

A row 420 schematically illustrates a second rendering process 421 for an example of a mobile re-projection layer which has a second rendering rate that is less than the first rendering rate. The second rendering process 421 is performed at the second rendering rate to render a graphical feature allocated to the second layer. In the schematic diagram, the second rendering process is shown as having a duration corresponding to the frame duration, however, it will be appreciated that the duration of each second rendering process may be shorter or longer than that that shown in the schematic diagram and may be different to the duration of the first rendering process.

Hence in the diagram shown in Figure 4, a row 430 schematically illustrates a re-projection process 431 performed to re-project a previously rendered graphical feature allocated to the mobile re-projection layer to obtain a re-projected graphical feature to be included in an image output for display by the output image generator 230. Hence for example, the image 406 output at the time T5 can be output by the output image generator 240 by combining the rendered graphical feature output by first rendering process 411 and the re-projected graphical feature output from the re-projection process 431 to obtain a composite image comprising graphical features allocated to respective different layers of the plurality of layers, in which at least one of the graphical features is obtained using re-projection.

It will be appreciated that the technique illustrated in Figure 4 may be performed using two or more layers, in which some of the layers may have a rendering rate that is the same as the frame rate or less than the frame rate of the output image generator 230, and in which some of the layers may have a same rendering rate or each of the layers may have a different rendering rate, and each layer may have a same or different image resolution. Whilst the example shown in Figure 4 illustrates the second rendering rate as being half that of the first rendering rate, it will be appreciated that the second rendering rate may take any suitable value that is less than the first rendering rate and that a re-projection process can be suitably performed as required to obtain a re-projected portion for forming the output image.

Typically, during a development stage for a virtual environment associated with a content, a developer manually decides on which parts (features) of a virtual environment are to be included in a given layer and decides on what rendering resources are available to a given layer. This can be a burdensome process requiring significant development time and is problematic in that once a developer decides upon a layer for a feature, the feature is permanently associated with that layer.

The techniques to be discussed below relate to using one or more properties associated with a graphical feature to allocate graphical features in a virtual environment to respective layers to optimise use of rendering resources. Execution of a video game, or other application, by a game engine may generate a sequence of video images, a sequence of in-game virtual camera positions and a sequence of depth buffer values, and a recording of such data for a previously executed video game may be used by the allocation circuitry 210 to perform an offline allocation of graphical features for the virtual environment. Alternatively or in addition, the data processing apparatus 200 can be configured to allocate one or more graphical features for a virtual environment to respective layers as part of an online process whilst images are being output by the image generator and properties of graphical features in the images output by the image generator can be used for performing the allocation.

In some examples, the data processing apparatus 200 may initially allocate the graphical features for the virtual environment to the mobile layer, and the allocation circuitry 210 can be configured to allocate a graphical feature to another layer different from the mobile layer in dependence upon one or more properties of the graphical feature identified from one or more of the images output by the output image generator. Hence more generally, in some examples the allocation circuitry 210 can be configured to allocate graphical features to the mobile layer as a default and subsequently re-allocate a graphical feature from the mobile layer to another layer in dependence upon one or more properties for the graphical feature.

One or more properties for a given graphical feature are obtained and the allocation circuitry 210 allocates the given graphical feature to a given layer of the plurality of layers accordingly, in which the respective layers have differing rendering resources. Properties used for allocating a graphical feature to a respective layer of the plurality of layers will now be discussed.

In embodiments of the disclosure, the allocation circuitry 210 is configured to allocate a graphical feature to a respective layer in dependence upon motion associated with the graphical feature. As discussed above, motion for a respective graphical feature with respect to other graphical features in the virtual environment and/or with respect to a reference point in the virtual environment and/or with respect to the viewpoint of the virtual camera can be used to allocate the respective graphical feature.

The allocation circuitry 210 can be configured to receive information indicative of a position of a graphical feature with respect to the virtual environment (e.g. with respect to a predetermined point in the virtual environment) and to allocate the virtual avatar to a respective layer in dependence upon changes in the position of the graphical feature over a period of time. In a simplest case in which the plurality of layers comprises the mobile layer and the static re-projection layer, the allocation circuitry 210 is configured to allocate the graphical feature to either the mobile layer or the static re-projection layer in dependence upon whether the information indicates that the position of the graphical feature with respect to the virtual environment is changeable. In this way, a mobile feature is allocated to the mobile layer and a static feature is allocated to the static re-projection layer. For the case in which the plurality of layers comprises the mobile layer and the mobile re-projection layer, the allocation circuitry 210 is configured to allocate the graphical object to the mobile layer in dependence upon whether a magnitude of the change in position for the graphical feature is greater than a threshold distance. In this way, graphical features with a higher mobility can be allocated to the mobile layer and graphical features with a lower degree of mobility can be allocated to the mobile re-projection layer.

For example, the graphical feature may be a virtual object such as an avatar in the virtual environment. In this case, the allocation circuitry 210 can receive position information for the avatar with respect to the virtual environment indicating that the position of the avatar changes with respect to the virtual environment over a period of time. For example, the position information may indicate that the avatar has a position P1 in the virtual environment at a time T1 and that the avatar has a position P2 in the virtual environment at a time T2, and the allocation circuitry 210 can be configured to allocate the avatar to the mobile layer in dependence upon whether the change in position for the avatar within a predetermined period of time exceeds a predetermined distance in the virtual environment. The allocation circuitry 210 thus allocates the virtual avatar to a respective layer according to the motion of the virtual avatar indicated by the information.

In another example, the graphical feature may be a virtual object such as a virtual tree in the virtual environment. In this case, the allocation circuitry 210 can receive position information for the virtual tree with respect to the virtual environment indicating that the position of the avatar does not change with respect to the virtual environment over a period of time. The allocation circuitry 210 thus allocates the virtual tree to a respective layer accordingly so that the virtual tree can be allocated to a layer associated with a lowest rendering quality (the static re-projection layer if present or the mobile re-projection layer if the static re-projection layer is not present).

Hence more generally, the allocation circuitry 210 can be configured to allocate a graphical feature to a respective layer of the plurality of layers in dependence upon whether a change in position for the graphical feature within a predetermined period of time exceeds a predetermined distance in the virtual environment.

In embodiments of the disclosure, the allocation circuitry 210 is configured to allocate the graphical feature to the respective layer in dependence upon motion vector information for the graphical feature. Known video compression techniques typically use motion vectors computed for macroblocks (e.g. 16x16 pixel blocks in an image frame) for indicating a change in position of a macroblock between frames in a sequence of image frames. An image frame is segmented into macroblocks and the macroblocks in one image frame can be matched with macroblocks in another image frame and a motion vector pointing from the centre of a macroblock in one image frame to the centre of a matching macroblock in another image frame is computed. As such, motion vector information for compressed video for the virtual environment providing an indication of a degree of motion for one or more graphical features in the virtual environment can be used by the allocation circuitry 210 to allocate a graphical feature to a respective layer. For example, motion vector information can be extracted from an MPEG stream using techniques such as those disclosed in "Extraction of Motion vectors from an MPEG Stream, J. Gilvarry, Technical Report 1999, Dublin City University", the contents of which are incorporated herein by reference.

The allocation circuitry 210 can thus allocate a graphical feature to a respective layer of the plurality of layers in dependence upon motion vector information for the graphical feature. For example, for a content such as a video game, an MPEG file associated with the video game can be used to obtain the motion vector information for one or more graphical features in the virtual environment. Motion vector information for a series of image frames can be analysed by the allocation circuitry 210 for allocating one or more graphical features to respective layers. In this way, a recording of the video content for a given video game can be used to obtain the motion vector information for one or more graphical features in the virtual environment so that the allocation circuitry 210 can allocate one or more of the graphical features on the basis of the motion vector information.

For example, for a graphical feature such as a user interface element that does not move from one image frame to the next, the motion vector information indicates that the graphical feature is a static graphical feature and the allocation circuitry 210 thus allocates the graphical feature to a layer accordingly. In the case where the plurality of layers includes the mobile layer and another layer (the another layer being one of the mobile re-projection layer and the static re-projection layer), the allocation circuitry 210 allocates the static graphical feature identified by the motion vector information to the another layer having a lower rendering quality than that of the mobile layer. Alternatively or in addition, for another graphical feature such as an in-game projectile exhibiting a high degree of motion between image frames, the motion vector information indicates that the graphical feature has a high degree of mobility and the allocation circuitry 210 thus allocates the graphical feature to the mobile layer in dependence upon the motion vector information.

In embodiments of the disclosure, the allocation circuitry 210 is configured to allocate the graphical feature to the respective layer in dependence upon the motion of the graphical feature with respect to the viewpoint of the virtual camera. Motion of a graphical feature relative to the viewpoint of the virtual camera due to at least one of motion of the virtual camera and motion of the graphical feature can be used to select which respective layer the graphical feature is to be allocated to. As explained previously, the virtual camera can be moved with respect to the virtual environment and as such a portion of the virtual environment included within the field of view of the virtual camera changes over time. The allocation circuitry 210 can be configured to receive information indicative of the position of the virtual camera with respect to the virtual environment and to receive information indicative of a position of a graphical feature with respect to the virtual environment. Therefore, features that exhibit no motion relative to the virtual camera (i.e. are fixed with respect to the virtual camera) can be identified and the allocation circuitry can allocate such features to static re-projection layer (or to the mobile re-projection layer if the static re-projection layer is not provided). For example, a graphical feature such as a weapon held by an avatar or helmet worn by an avatar which moves with the avatar may thus exhibit no motion relative to the virtual camera when the virtual camera corresponds to the position of the avatar and such features can be identified as being static and thus allocated accordingly to a layer with a low associated rendering quality. Conversely, features that exhibit a high degree of motion relative to the virtual camera and which are thus likely to have a changeable position in image frames generated for the virtual camera can be identified an allocated accordingly to layer with a higher associated rendering quality.

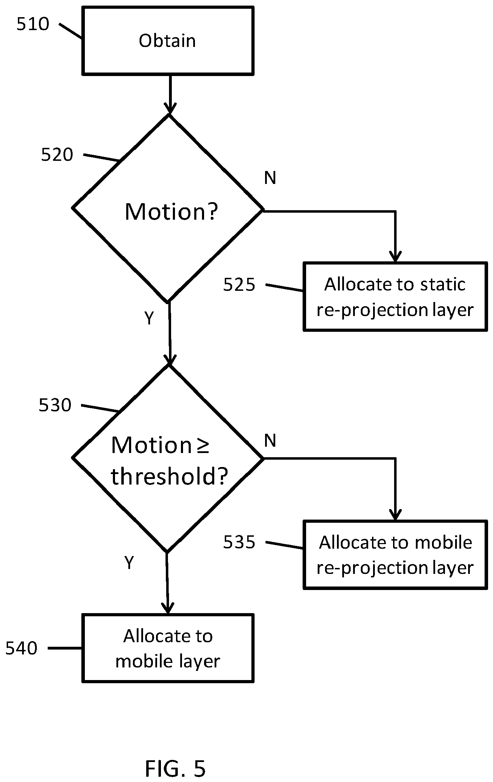

In embodiments of the disclosure, the allocation circuitry 210 is configured to allocate the graphical feature to the mobile layer in dependence upon whether the motion associated with the graphical feature exceeds a predetermined threshold. A predetermined threshold can be used for comparison with the motion of a graphical feature so as to determine whether to allocate the graphical feature to the mobile layer. For a graphical feature having motion that is greater than or equal to the predetermined threshold, the allocation circuitry 210 accordingly allocates the graphical feature to the mobile layer. For a graphical feature having motion that is less than the predetermined threshold, the allocation circuitry 210 accordingly allocates the graphical feature to another layer other than the mobile layer. In a simplest case using the mobile layer and the mobile re-projection layer, the graphical feature is allocated to either the mobile layer or the mobile re-projection layer in dependence upon an evaluation of the motion of the graphical feature with respect to the predetermined threshold. Similarly, in a case using the mobile layer, the mobile re-projection layer and the static re-projection layer, a process such as that shown in Figure 5 can be used to allocate a graphical feature to one of the mobile layer, the mobile re-projection layer and the static re-projection layer.

Figure 5 is a schematic flowchart illustrating an example process of allocating a graphical feature to one of the mobile layer, the mobile re-projection layer and the static re-projection layer. At a step 510 the allocation circuitry 210 obtains data associated with the graphical feature for the virtual environment. At a step 520 the allocation circuitry 210 determines whether the graphical feature is a mobile graphical feature or a static virtual feature with respect to the virtual camera in dependence upon the obtained data. At a step 525, when the allocation circuitry 210 determines that the graphical feature is a static graphical feature the allocation circuitry 210 allocates the graphical feature to the static re-projection layer. At a step 530, when the allocation circuitry 210 determines that the graphical feature is a mobile graphical feature, the allocation circuitry 210 determines whether the motion associated with the graphical feature is greater than or equal the predetermined threshold. At a step 535, when the allocation circuitry 210 determines that the motion is less than the predetermined threshold, the allocation circuitry 210 allocates the graphical feature to the mobile re-projection layer. At a step 540, when the allocation circuitry 210 determines that the motion is greater than or equal to predetermined threshold, the allocation circuitry 210 allocates the graphical feature to the mobile layer. As explained previously, further mobile re-projection layers may be provided corresponding to different degrees of mobility between the re-projection layer and the mobile layer and/or between the re-projection layer and the static layer in the process in Figure 5 and any number of predetermined thresholds may be used for allocating a graphical feature to a respective layer of the plurality of layers.

In embodiments of the disclosure, the allocation circuitry 210 is configured to allocate the graphical feature to the respective layer in dependence upon a depth of the graphical feature with respect to the viewpoint of the virtual camera. Alternatively or in addition to using a motion associated with a graphical feature to allocate the graphical feature, the allocation circuitry 210 can be configured to allocate a graphical feature to a respective layer according to a depth of the graphical feature in the virtual environment relative to the virtual camera. A graphical feature located in a foreground portion of a scene is more likely to be of more importance for viewer's experience and/or is more likely to be subject to changes in position in an image generated for the virtual camera than a graphical feature located in a background portion of the scene. For example, a background image feature, such as a sky portion, in an image viewed by the virtual camera has a relatively similar position in each successive image frame and such a graphical feature can thus be rendered with a lower rendering quality without being perceived by a viewer. Conversely, a foreground image feature, such as a nearby virtual avatar, has a position that is much more likely to be subject to variations from one image frame to the next and the position of the avatar in the images output for display may vary significantly over a series of image frames. Similarly, a given virtual object located in a foreground portion of an image is generally more likely to be subject to larger variations in position from one image frame to the next compared to when the same given object is located in a background portion of an image. As such, depth of a graphical feature can be used for allocating the graphical feature.

In embodiments of the disclosure, the allocation circuitry 210 is configured to allocate the graphical feature to the mobile layer in dependence upon whether a depth value for the graphical feature is less than a predetermined depth value. A predetermined depth value can be used for comparison with a depth of a graphical feature to determine whether to allocate the graphical feature to the mobile layer. Furthermore, a graphical feature positioned within a predetermined distance from the virtual camera in the virtual environment is likely to be of more visual significance for a user's experience than a feature located at a greater depth from the virtual camera, and use of the predetermined depth value in this way can allow such graphical features to be rendered with greater rendering quality. The predetermined depth value can be freely set by a user and may differ for different virtual environments.

Depth information associated with a graphical feature may be generated as part of the operation of a computer games machine's graphics engine. During execution of an application such as a video game, pixel data and depth data for each image frame can be generated by the graphics engine stored in a buffer. In some cases, a dedicated depth buffer may be used for storing the depth data. The pixel data indicates the colour properties (including brightness) of a pixel to be displayed at a pixel position. The depth information indicates a depth value associated with that pixel, such that in a combination with other image data, the pixel with a depth value representing a position closest to the viewer will take precedence over another pixel at the same position. The depth data is thus used for calculating which parts of a virtual scene are in front of each other and hence potentially occlude each other in the final image frame. The depth data including depth values (e.g. 8 bit or 16 bit depth values) for a graphical feature can thus be accessed, in which the depth data is indicative of a depth of the graphical feature with respect to the viewpoint of the virtual camera for the image frame. In some examples, virtual camera position and orientation data may also be output by a video game as a separate data stream or as metadata associated with the depth data and pixel data.

The allocation circuitry 210 can thus receive depth data associated with a graphical feature in the virtual environment, the depth data indicating a depth of the graphical feature with respect to a virtual camera, and the allocation circuitry 210 can allocate the graphical feature to a respective layer in dependence upon the depth data. In this way, a graphical feature located closer to the viewpoint of the virtual camera can be allocated to a layer having greater rendering quality and a graphical feature located further from the virtual camera can be allocated to a layer having lower rendering quality.

In embodiments of the disclosure, the allocation circuitry 210 is configured to allocate at least one graphical feature currently allocated to a respective layer of the plurality of layers to another respective layer of the plurality of layers in dependence upon one or more of the properties for the graphical feature to thereby reallocate the graphical feature. A property associated with a graphical feature such as the depth with respect to the virtual camera or an amount of motion of the graphical feature with respect to a reference point in the virtual environment may change over time. The allocation circuitry 210 is configured to allocate the graphical feature to a respective layer responsive to changes in one or more of the properties for the graphical feature so that the graphical feature can be reallocated according to one or more of the current properties for the graphical feature. More generally, the allocation circuitry 210 can be configured to allocate a given graphical feature to a first layer of the plurality of layers in dependence upon a first property of the graphical feature and to reallocate the graphical feature to instead allocate the graphical feature to a second layer different from the first layer in dependence upon the first property when the first property changes.

For example, a given graphical feature in the virtual environment may initially exhibit a high degree of movement with respect to other graphical features in the virtual environment and/or the virtual camera and may thus have been initially allocated to the mobile layer. Subsequently, the given graphical feature may stop moving with respect to the virtual environment. For example, a virtual car may initially be driven in the virtual environment and then parked at a location in the virtual environment. Alternatively, a graphical feature such as a virtual weapon may initially move with respect to the virtual camera when operated by an avatar (e.g. an enemy avatar in a game) and the virtual weapon may subsequently be acquired by an avatar corresponding to the virtual camera such that the virtual weapon exhibits a smaller amount of motion (or potentially no motion) relative to the virtual camera. In such cases, the allocation circuitry 210 can reallocate the graphical feature from the mobile layer to another layer having a lower rendering quality responsive to a change in at least one property associated with the graphical feature. In a similar manner, a feature that initially does not move with respect to the virtual environment may be picked up by an avatar thus resulting increased motion for the graphical feature and a reallocation can be performed to allow rendering for the graphical feature using a layer with improved rendering quality.

Alternatively or in addition to changes in motion associated with a graphical feature, changes in depth associated with a graphical feature can similarly be used for reallocate a graphical feature. In this way, a graphical feature located at a large depth from the virtual camera may initially be allocated to a given layer and subsequently reallocated to another layer having a higher rendering quality as the virtual camera approaches the graphical feature.

Hence more generally, a respective layer to which a respective graphical feature is allocated can be dynamically updated responsive to changes in the virtual environment.

In embodiments of the disclosure, the rendering circuitry 220 is configured to render graphical features allocated to respective different layers of the plurality of layers with at least one of a different rendering rate and a different image resolution. A different rendering quality is associated with each respective layer of the plurality of layers, in which the rendering quality for a layer is dependent upon the rendering rate and image resolution set for the layer, and as such a processing resource available for the rendering operations associated with each layer is different. The mobile layer has a greatest rendering quality of the plurality of layers, and the mobile re-projection layer has a greater rendering quality than the static re-projection layer. As explained previously, in some cases the rendering quality associated with the mobile re-projection layer may be such that a single rendering (or a similarly low rendering rate) of a given graphical feature allocated to the mobile re-projection layer (and/or static re-projection layer) is obtained and re-projection of that given graphical feature is used to obtain a rate corresponding to the rate at which images are output by the output image generator 230.

In some examples, the mobile layer, mobile re-projection layer and static re-projection layer may each have a same image resolution and differ due to having different rendering rates. The mobile layer preferably has an image resolution that is higher than the other layers and at least the same as that of the other layers. However, in some examples an image resolution associated with the mobile layer may be lower than an image resolution associated with the mobile re-projection layer (or some of the mobile re-projection layers when more than one mobile re-projection layer is provided). For instance, for a virtual environment with fast moving graphical features, a high output image frame rate and thus high rendering rate may be used for the mobile layer, and thus an image resolution of the mobile layer that is lower than would otherwise be used may be implemented for the mobile layer to allow the graphical feature(s) allocated to the mobile layer to be rendered at a rate substantially the same as the frame rate.

In embodiments of the disclosure, the rendering circuitry 220 is configured to render one or more graphical features allocated to the mobile layer with a first rendering rate and to render one or more graphical features allocated to the mobile re-projection layer with a second rendering rate, the first rendering rate being greater than the second rendering rate. As explained above with reference to Figures 3 and 4, the rendering rate associated with the mobile layer is greater than a rendering rate associated with the mobile re-projection layer, and as such re-projection is performed for a rendered graphical feature allocated to the mobile re-projection layer to obtain a frame rate corresponding to the rate at which the image output generator 230 outputs image frames for display. An image resolution may be the same or may be different for the mobile layer and the mobile re-projection layer.

In embodiments of the disclosure, the first rendering rate is substantially the same as a display rate for a display device, and wherein the output image generator is configured to re-project one or more graphical features allocated to the mobile re-projection layer. The output image generator 230 is configured to output the image to a display device via a wired or wireless communication and a rate at which the output image generator 230 outputs the image is substantially the same as a display rate (refresh rate) for the display device. For example, the display device, such as a monitor or HMD, may have a display rate (refresh rate) of 120 Hz in which case the output image generator 230 outputs image frames for display by the display device at 120 Hz. In this example, the first rendering rate associated with the mobile layer may be set to 120 Hz and a lower rendering rate such as 30 Hz or 60 Hz, for example, may be associated with the mobile re-projection layer. As such, re-projection can be used to update a rendered graphical feature allocated to the mobile re-projection layer to obtain an output rate of 120 Hz . As such, a graphical feature allocated to the mobile re-projection layer may be rendered by the rendering circuitry 220 in dependence upon a first position and/or orientation for the viewpoint for the virtual camera, and the output image generator 230 can output an image for display according to a current position and/or orientation for the viewpoint for the virtual camera by re-projecting the rendering of the graphical feature according to a difference between the first position and/or orientation for the viewpoint and the current position and/or orientation for the viewpoint. In particular, the output image generator 230 performs re-projection for a graphical feature of the mobile re-projection layer to re-project the graphical feature at a rate corresponding to the rendering rate of the mobile layer.

As discussed above, the viewpoint of the virtual camera may be updated by a game engine as part of the execution of a video game or may be updated responsive to changes in a tracked position and/or orientation of an HMD. For example, a game engine may update the virtual camera to follow a non-player character in a game or the game engine may receive a user input (e.g. from a handheld controller) and update the virtual camera to follow a player character. Information indicative of the viewpoint for the virtual camera is thus used by the data processing apparatus 200 to output an image for display according to the viewpoint of the virtual camera, in which the image can be formed of graphical elements allocated to one or more layers, and in which when formed using graphical elements from at least one of the mobile re-projection layer and the static re-projection layer the output image generator 230 performs re-projection for a rendered graphical feature.

In embodiments of the disclosure, the output image generator 230 is configured to re-project one or more graphical features allocated to the mobile re-projection layer in dependence upon changes in position and/or orientation of a viewpoint of a virtual camera for the image. In embodiments of the disclosure, the output image generator 230 is configured to re-project one or more graphical features allocated to the static layer irrespective of changes in position and/or orientation of a viewpoint of a virtual camera for the image. Whereas the output image generator 230 performs image re-projection for a rendered graphical feature allocated to the mobile re-projection layer to re-project a most recently rendered graphical feature according to a difference between a viewpoint for which the graphical feature is rendered and a current viewpoint for which the output image including the graphical feature is to be generated, the output image generator 230 performs image re-projection for a rendered graphical feature allocated to the static re-projection layer irrespective of the viewpoint of the virtual camera.

In embodiments of the disclosure, the data processing apparatus 200 comprises receiving circuitry (not shown in Figure 3) configured to receive gaze data indicative of a gaze direction for a user, and wherein the allocation circuitry 210 is configured to adjust the rendering quality for at least part of one of the plurality of respective layers in dependence upon the gaze direction. One or more sensors can be provided as part of an HMD to track a user's gaze direction when wearing the HMD. Similarly, one or more sensors may be arranged with respect to a user to track a user's gaze direction when viewing a conventional monitor. Data indicative of a detected gaze direction can be received by the data processing apparatus 200 and a rendering quality associated with one or more of the layers can be adjusted responsive to the gaze direction. For example, one or more of an image resolution and a rendering rate can be adjusted for a respective layer according to the gaze direction.

The constraints of the human visual system are such that only a foveal part of a user's vison is observed with high detail and peripheral parts of the user's vision are observed with lower detail. As such, the allocation circuitry 210 can be configured to increase a rendering quality for a respective layer having a graphical feature corresponding to the gaze direction so that greater rendering resources can be used for one or more graphical features observed by the user's foveal portion of their vision. For example, the rendering quality associated with the mobile re-projection layer can be temporarily increased in response to detecting that the user's gaze is directed at a graphical feature allocated to the mobile re-projection layer. Similarly, the quality for at least the part of that layer comprising that graphical feature (for example the part corresponding to the foveal portion) may be increased. When subsequently detecting that the user's gaze is no longer directed at the graphical feature allocated to the mobile re-projection layer, the allocation circuitry 210 can reduce the rendering quality associated with the mobile re-projection layer, preferably back to the previously used rendering quality.

Optionally, in order to further optimise use of processing resources, the allocation circuitry 210 can also be configured to decrease a rendering quality for a respective layer having a graphical feature not corresponding to the gaze direction. In this way, the rendering resources associated with one layer can be reduced and the rendering resources associated with another layer that is currently targeted by the user's gaze direction can be temporarily increased. This can potentially allow the overall rendering resources for the plurality of layers to remain substantially the same whilst dynamically allocating rendering resources between the layers according to a layer that is currently targeted by the user's gaze direction.

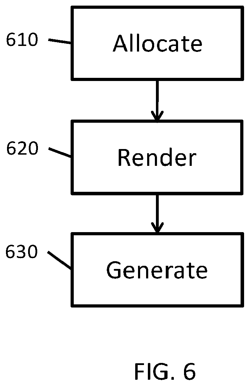

Figure 6 is a schematic flowchart illustrating a data processing method. The method comprising:
allocating (at a step 610) a graphical feature for a virtual environment to a respective layer from a plurality of respective layers in dependence upon one or more properties for the graphical feature, the plurality of respective layers comprising a mobile layer and at least one of a mobile re-projection layer and a static re-projection layer;
rendering (at a step 620) graphical features allocated to respective different layers of the plurality of respective layers with a different rendering quality; and
generating (at a step 630) an image for display according to a viewpoint of a virtual camera, in which the image comprises graphical features allocated to respective different layers of the plurality of layers.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus, comprising:
allocation circuitry to allocate a graphical feature for a virtual environment to a respective layer from a plurality of respective layers in dependence upon one or more properties for the graphical feature, wherein the plurality of respective layers comprises a mobile layer and at least one of a mobile re-projection layer and a static re-projection layer;
rendering circuitry to render graphical features allocated to respective different layers of the plurality of respective layers with a different rendering quality; and
an output image generator to generate an image for display according to a viewpoint of a virtual camera, wherein the image comprises graphical features allocated to respective different layers of the plurality of layers.

2. The data processing apparatus according to claim 1, wherein the output image generator is configured to generate the image for display by re-projecting at least one rendered graphical feature allocated to the mobile re-projection layer or the static re-projection layer.

3. The data processing apparatus according to claim 1 or claim 2, wherein the allocation circuitry is configured to allocate the graphical feature to the respective layer in dependence upon motion associated with the graphical feature.

4. The data processing apparatus according to claim 3, wherein the allocation circuitry is configured to allocate the graphical feature to the respective layer in dependence upon one or more selected from the list consisting of:
i. the motion of the graphical feature with respect to the viewpoint of the virtual camera; and
ii. motion vector information for the graphical feature.

5. The data processing apparatus according to any one of claims 3 to 4, wherein the allocation circuitry is configured to allocate the graphical feature to the mobile layer in dependence upon whether the motion associated with the graphical feature exceeds a predetermined threshold.

6. The data processing apparatus according to any preceding claim, wherein the allocation circuitry is configured to allocate the graphical feature to a respective layer from the plurality of layers in dependence upon a depth of the graphical feature with respect to the viewpoint of the virtual camera.

7. The data processing apparatus according to any preceding claim, wherein the allocation circuitry is configured to allocate at least one graphical feature currently allocated to a respective layer of the plurality of layers to another respective layer of the plurality of layers in dependence upon one or more of the properties for the graphical feature to thereby reallocate the graphical feature.

8. The data processing apparatus according to any preceding claim, wherein the rendering circuitry is configured to render graphical features allocated to respective different layers of the plurality of layers with at least one of a different rendering rate and a different image resolution.

9. The data processing apparatus according to any preceding claim, wherein the rendering circuitry is configured to render one or more graphical features allocated to the mobile layer with a first rendering rate and to render one or more graphical features allocated to the mobile re-projection layer with a second rendering rate, the first rendering rate being greater than the second rendering rate.

10. The data processing apparatus according to claim 9, wherein the output image generator is configured to re-project one or more graphical features allocated to the mobile re-projection layer in dependence upon changes in position and/or orientation of the viewpoint of the virtual camera.

11. The data processing apparatus according to any preceding claim, wherein the output image generator is configured to re-project one or more graphical features allocated to the static re-projection layer irrespective of changes in position and/or orientation of the viewpoint of the virtual camera.

12. The data processing apparatus according to any preceding claim, comprising receiving circuitry configured to receive gaze data indicative of a gaze direction for a user, and wherein the allocation circuitry is configured to adjust the rendering quality for at least one of the plurality of respective layers in dependence upon the gaze direction.

13. The data processing apparatus according to any preceding claim, wherein the viewpoint of the virtual camera is updated responsive to at least one of a position and an orientation of a head mounted display 'HMD', wherein the output image generator is configured to output the image for display by the HMD.

14. A data processing method, comprising:
allocating a graphical feature for a virtual environment to a respective layer from a plurality of respective layers in dependence upon one or more properties for the graphical feature, the plurality of respective layers comprising a mobile layer and at least one of a mobile re-projection layer and a static re-projection layer;
rendering graphical features allocated to respective different layers of the plurality of respective layers with a different rendering quality; and
generating an image for display according to a viewpoint of a virtual camera, in which the image comprises graphical features allocated to respective different layers of the plurality of layers.

15. Computer software which, when executed by a computer, causes the computer to carry out the method of claim 14.
